# FASCICULE DE BREVET EUROPEEN

(11) **EP 3 684 735 B1**
(45) Date de publication et mention de la délivrance du brevet: **29.04.2026**
(21) Numéro de dépôt: 18752602.5
(22) Date de dépôt: 20.07.2018
(51) Int. Cl.: C03B 5/00, B09B 3/00, C03B 5/02, C03B 5/20, C03B 5/26

(54) **PROCÉDÉ ET DISPOSITIF DE VITRIFICATION D'UN MATÉRIAU PULVÉRULENT**
VERFAHREN UND VORRICHTUNG ZUM VERGLASEN EINES PULVERFÖRMIGEN MATERIALS
PROCESS AND DEVICE FOR VITRIFICATION OF A POWDERY MATERIAL

(30) Priorité: 22.09.2017 FR 1758797
(43) Date de publication de la demande: 29.07.2020
(73) Titulaire: Europlasma, 40110 Morcenx (FR)
(72) Inventeur: BRUNEAU, Franck, 33620 Lapouyade (FR); ROBERT-ARNOUIL, Jean-Paul, 33600 Pessac (FR)
(74) Mandataire: Plasseraud IP
(86) Numéro de dépôt international: PCT/FR2018/051868
(87) Numéro de publication internationale: WO 2019/058038

(56) Documents cités:
- DE-A1- 4 033 304
- FR-A1- 2 764 877
- JP-A- 2008 249 220
- US-A- 5 237 940
- US-A- 5 574 746

## Description

### Domaine de l'invention

La présente invention se rapporte à un procédé de vitrification en continu d'un matériau pulvérulent et à un dispositif pour la mise en œuvre de ce procédé.

Le procédé et le dispositif de l'invention sont essentiellement destinés à rendre inerte par vitrification des matériaux pulvérulents ou de faible granulométrie contenant des substances toxiques telles que de l'amiante ou des métaux lourds tels que le mercure ou le plomb, et leurs sels.

### Arrière-plan technologique

Il est connu que la mise en œuvre ou la génération de matériaux sous forme pulvérulente peut entraîner la dispersion d'une partie de ces matériaux dans l'atmosphère environnante.

Cette dispersion peut être à l'origine de risques d'intoxication ou encore être vecteur de gaz ou de liquide toxiques.

La prise en charge et le traitement de ces matériaux pulvérulents constituent donc des enjeux majeurs tant d'un point de vue sanitaire qu'environnemental.

A titre d'exemple, l'incinération d'ordures ménagères, de déchets industriels ou hospitaliers est connue comme une source de matériaux pulvérulents.

En particulier, l'incinération de déchets ménagers produit des effluents solides et des effluents gazeux, ou fumées d'incinération.

Les effluents solides forment la fraction minérale des déchets et comprennent notamment des cendres dites "sous chaudières" qui sont des matériaux pulvérulents très toxiques. Ces cendres contiennent, en effet, des métaux lourds et leurs sels.

Les effluents gazeux sont à caractère plus ou moins acide du fait de la présence de gaz acides tels que HCl et HF, et d'anhydrides d'acides gazeux tels que SO₂ et CO₂. Ces effluents gazeux comprennent également des composés toxiques tels que des métaux lourds et leurs sels, et des résidus solides appelés cendres volantes.

Ces effluents gazeux ou fumées doivent être filtrés et traités pour neutraliser leur acidité, condenser les métaux et leurs sels et retenir les cendres volantes avant d'être libérés dans l'atmosphère.

La vitrification est considérée aujourd'hui comme le principal procédé d'inertage de ces matériaux ou déchets dangereux d'incinération, en vue de leur stockage, voire de leur valorisation.

En effet, ces matériaux contenant de la silice et de l'alumine se liquéfient et forment un bain de fusion lorsqu'ils sont soumis à des températures supérieures à 1300°C.

Ce bain de fusion lorsqu'il est refroidi, forme un matériau cristallin ou un verre amorphe solide, véritable matrice de rétention des métaux lourds, dès lors manipulable.

On connaît ainsi du document FR 2764877 au nom de la présente demanderesse, un dispositif pour la vitrification de matériaux pulvérulents mettant en œuvre une torche à plasma à arc non transféré pour fondre le matériau pulvérulent à traiter.

Bien que donnant de bons résultats, on constate que ce dispositif de vitrification est à l'origine de certains inconvénients.

Tout d'abord, ce dispositif de vitrification d'un matériau pulvérulent comprend un four incluant une zone de fusion d'un matériau pulvérulent et une zone de coulée d'un bain de fusion, ces deux zones étant séparées par une pierre de barrage. Un ventilateur d'extraction permet d'extraire au travers d'un conduit les gaz et fumées issus de la mise en fusion du matériau pulvérulent dans la zone de fusion.

On constate ainsi que seule une fraction des gaz et fumées générés lors de la vitrification du matériau pulvérulent est extraite pour être traitée. Une partie non négligeable de ces gaz et fumées est ainsi libérée dans l'environnement immédiat avec des effets néfastes pour les organismes vivants qui y sont directement exposés.

Par ailleurs, une différence de pression inappropriée appliquée entre la zone de fusion et la zone de coulée peut résulter en une perte dans l'écoulement du bain de fusion vers la zone de coulée correspondante, voire au passage de matériaux pulvérulents non fondus, encore appelés "infondus".

On constate également une usure de la pierre de barrage du fait de son contact prolongé avec le matériau en fusion, lequel s'écoule du bain de fusion vers la zone de coulée.

Or, l'usure de cette pierre de barrage entraîne une perte d'étanchéité entre les deux enceintes qu'elle sépare. Des fumées et gaz issus de la mise en fusion du matériau pulvérulent dans la zone de fusion peuvent dès lors passer de la zone de fusion vers la zone de coulée et être rejetés dans l'atmosphère environnante.

En outre, on constate qu'une pierre de barrage ainsi usée est susceptible de laisser libre passage à des infondus vers la zone de coulée.

On connaît du document JP 2008 249220 A, un four de fusion au plasma capable de supprimer la décharge d'un gaz d'échappement comprenant des cendres de poussière d'amiante nocives, uniquement issu de la cuve principale de ce four, content du métal fondu de scories. Voir également le document FR 2 764 877 A1.

### Objet de l'invention

La présente invention vise à pallier les inconvénients de l'art antérieur en proposant un procédé de vitrification en continu d'un matériau pulvérulent, simple dans sa conception et dans son mode opératoire, fiable et peu coûteux, répondant aux inconvénients ci-dessus mentionnés.

Notamment, un objet de la présente invention est un tel procédé de vitrification permettant de capter l'ensemble des gaz et des fumées générés lors du processus de vitrification pour empêcher la libération de ces gaz et fumées dans l'atmosphère environnante, et donc contrôler l'impact sanitaire et environnemental de ce traitement par vitrification.

Un autre objet de la présente invention est un tel procédé permettant de réduire de manière sensible la détérioration du circuit d'extraction des gaz et fumées issus de la vitrification d'un matériau pulvérulent, afin d'espacer les opérations de maintenance dans le temps.

Encore un objet de la présente invention est un tel procédé maintenant l'étanchéité, en production, entre les zones de fusion et de coulée.

La présente invention a encore pour but de fournir un dispositif pour la mise en œuvre de ce procédé, destiné à rendre inerte par vitrification un matériau pulvérulent comprenant des composés toxiques, notamment des métaux lourds et leurs sels.

Le procédé et le dispositif de l'invention permettent notamment un contrôle efficace du processus de fusion d'un matériau pulvérulent et l'obtention d'un verre amorphe, ou d'un matériau cristallisé, qui remplit toutes les normes s'appliquant au stockage des déchets inertes voire à leur valorisation, par exemple, comme matériau de construction.

### BREVE DESCRIPTION DE L'INVENTION

A cet effet, l'invention concerne un procédé de vitrification d'un matériau pulvérulent, selon l'invention définie dans la revendication 1.

Ce matériau pulvérulent est introduit par au moins un port d'introduction dans la zone de fusion délimitée par la première enceinte.

Chaque pierre de barrage détermine, ou limite la quantité, de matériau en fusion s'écoulant du bain de fusion présent dans la première enceinte, ou enceinte principale, vers la zone de coulée dans la seconde enceinte et à l'entrée de laquelle cette pierre de barrage est de préférence agencée.

Lors du fonctionnement du dispositif de vitrification, l'extrémité au moins de cette pierre de barrage est immergée dans le matériau en fusion du bain de fusion pour assurer une étanchéité empêchant les gaz et fumées générés par la mise en fusion du matériau pulvérulent dans la zone de fusion de se propager vers la ou les zones de coulée. L'extrémité au moins immergée de cette pierre de barrage empêche également les matériaux non fondus, ou infondus, de pénétrer dans la ou les zones de coulée.

De manière avantageuse, la zone de débordement de chaque zone de coulée est placée à une extrémité de la zone de coulée correspondante. A titre purement illustratif, cette zone de débordement comporte une rampe inclinée vers un port de sortie le long de laquelle s'écoule le matériau en fusion.

Avantageusement, grâce au procédé de la présente invention, l'ensemble des gaz et fumées produits dans le dispositif de vitrification sont ainsi captés et évacués pour traitement. On évite ainsi toute dispersion de fumées et/ou gaz nocifs, notamment lors de l'étape d'extraction, dans l'atmosphère environnant le dispositif de vitrification, ce qui nécessite l'ajout d'un dispositif de captation de ses fumées.

Selon un aspect du procédé de l'invention, on régule le niveau du bain de fusion, l'extraction des gaz et fumées générés par la mise en fusion du matériau pulvérulent dans ladite zone de fusion ainsi que l'extraction des gaz et fumées dans chaque seconde enceinte de manière à favoriser l'écoulement du matériau en fusion du bain de fusion vers chaque zone de coulée.

Un tel mode de réalisation est avantageusement autorisé grâce à l'immersion dans le matériau en fusion d'au moins l'extrémité de ladite au moins une pierre de barrage séparant la zone de fusion de la zone de coulée correspondante, l'étanchéité entre ces deux zones étant ainsi assurée.

On maitrise donc indépendamment les pressions dans chacune des zones, ce qui permet de réguler le niveau du bain et le flux du matériau en fusion extrait.

On peut chercher à au moins équilibrer les pressions entre la première enceinte délimitant la zone de fusion et la seconde enceinte délimitant la zone de coulée correspondante.

On peut aussi générer une dépression dans ladite au moins une seconde enceinte qui soit plus importante que la dépression établie dans la première enceinte contenant le bain de fusion, pour créer un effet d'aspiration vers ladite au moins une seconde enceinte.

Par exemple, cette régulation est réalisée par pilotage de ventilateurs d'extraction.

Selon un autre aspect du procédé de l'invention, chaque zone de débordement comportant un port de sortie présentant une paroi latérale délimitant un canal au travers duquel passe ladite partie du bain de fusion extraite, une partie au moins de ladite paroi latérale s'étendant à l'extérieur de ladite seconde enceinte correspondante comprenant au moins un orifice, on capte une partie au moins desdits gaz et fumées au travers dudit ou desdits orifices, de sorte à diluer lesdits gaz et fumées ainsi captés avec de l'air extérieur.

On observe en effet que les gaz et fumées qui sont captés, sont acides et entraînent une dégradation rapide des conduites métalliques du dispositif de collecte assurant leur collecte et évacuation.

Des opérations de maintenance sont alors rendues nécessaires pour entretenir l'étanchéité du circuit d'extraction, lesquelles requièrent l'arrêt du dispositif de vitrification.

Il en résulte des coûts opérationnels importants.

Cette aspiration d'air extérieur permet avantageusement de diluer les gaz et fumées ainsi captés, ce qui protège les éléments du circuit d'extraction des gaz et fumées placé en aval.

On cherche également par un tel mode de réalisation à ne pas refroidir la langue de vitrifiat, ou matériau en fusion, s'écoulant par le port de sortie pour assurer son extraction.

Chaque zone de débordement comportant un port de sortie par lequel passe ladite partie du bain de fusion extraite, on capte une partie au moins desdits gaz et fumées générés lors de ladite étape d'extraction au travers d'un ou plusieurs orifices placés à proximité dudit port de sortie.

Ces orifices sont donc placés sur le corps de la seconde enceinte correspondante, en étant proche du port de sortie.

Selon un autre aspect du procédé de l'invention, pour au moins une torche à plasma, on entoure au moins la partie de ladite torche à plasma, placée à l'intérieur de ladite première enceinte, d'un écran gazeux de protection pour protéger au moins ladite partie, au moins un moyen d'introduction d'un fluide gazeux étant conformé pour l'introduction et la génération dudit écran gazeux autour de ladite au moins une partie.

Encore selon un autre aspect du procédé de l'invention, la zone de débordement de chaque zone de coulée comportant un bec de coulée délimitant le niveau du bain de fusion; pour chaque zone de coulée, on ajuste la hauteur du bec de coulée correspondant pour régler le niveau du bain de fusion de sorte qu'au moins l'extrémité libre de ladite pierre de barrage correspondante est en permanence immergée lorsque le dispositif est en fonctionnement, ou production, pour maintenir l'étanchéité entre les zones de fusion et de coulée correspondante pour les gaz et les fumées produites dans chacune de ces zones.

La présente invention concerne également un dispositif pour la mise en œuvre du procédé de vitrification d'un matériau pulvérulent tel que décrit précédemment, selon l'invention définie dans la revendication 6.

De manière avantageuse, ladite au moins une torche à plasma est une torche à plasma d'arc non transféré.

Un tel mode de réalisation permet avantageusement de maintenir la chaleur dans le port d'extraction et donc de favoriser la fluidité du matériau à extraire. Ce circuit d'extraction comprend avantageusement des conduites assemblées entre elles, l'intérieur desquelles est placé en dépression pour assurer l'aspiration des gaz et fumées et leur transport vers une unité de traitement des gaz et fumées.

A titre d'exemple, au moins un premier orifice d'extraction peut être placé dans la partie inférieure de la seconde enceinte correspondante en étant proche, ou à proximité, du port de sortie pour la captation des gaz et fumées produits lors de l'extraction du matériau en fusion sortie pour la captation des gaz et fumées produits lors de l'extraction du matériau en fusion hors du dispositif de vitrification.

Dans différents modes de réalisation particuliers de ce dispositif de vitrification, chacun ayant ses avantages particuliers et susceptibles de nombreuses combinaisons techniques possibles:
- cette première enceinte comporte au moins un dispositif d'injection du matériau pulvérulent dans ladite enceinte.

De préférence, chaque dispositif d'injection est configuré pour assurer au matériau pulvérulent ainsi introduit une composante orientée vers le bas de ladite première enceinte et une composante horizontale orientée vers ladite zone de coulée.

De manière avantageuse, chaque dispositif d'introduction est placé sur ladite première enceinte à l'opposé d'une zone de coulée correspondante par rapport au bain de fusion
- la zone de débordement de chaque zone de coulée comporte un bec de coulée délimitant le niveau du bain de fusion, la hauteur au moins dudit bec de coulée étant variable pour ajuster sa position et ainsi varier le niveau du bain de fusion de sorte qu'au moins l'extrémité libre de ladite pierre de barrage est immergée pour assurer l'étanchéité de la zone de coulée correspondante et de la zone de fusion,
- le port de sortie de chaque seconde enceinte comporte une paroi latérale définissant un canal d'extraction de ladite partie de bain en fusion, lequel s'étend à l'extérieur de ladite seconde enceinte correspondante en comportant au moins un orifice d'extraction desdits gaz et fumées de sorte que lors de l'extraction de ladite partie, de l'air extérieur est mélangé auxdits gaz et fumées ainsi captés pour leur dilution.

Un tel mode de réalisation permet avantageusement d'aspirer de l'air par l'extrémité libre dudit port de sortie de sorte que les gaz et fumées ainsi captées sont dilués avant transport dans un circuit d'extraction. On protège ainsi avantageusement les éléments tels que des conduites de ce circuit d'extraction.

De manière avantageuse, au moins un de ces orifices d'extraction est placé plus bas, ou en dessous, de ladite zone de débordement.

A titre purement illustratif, ce moyen de débordement comporte un bec de coulée prolongé par une rampe dont la pente est inclinée vers ledit port de sortie. Ce port de sortie peut, par exemple, présenter une forme tubulaire creuse.
- lesdits orifices sont régulièrement distribués, par exemple, sur le pourtour de ladite paroi latérale délimitant le port de sortie,
- chaque seconde enceinte étant reliée à au moins un circuit d'extraction comprenant au moins un ventilateur pour aspirer les gaz et fumées produits dans l'enceinte correspondante, ledit dispositif de vitrification comporte un moyen de pilotage pour commander lesdits ventilateurs et réguler le niveau du bain de fusion dans ladite zone de fusion afin de favoriser l'écoulement d'une partie du bain de fusion de ladite zone de fusion vers ladite zone de coulée,
- le dispositif comporte au moins deux secondes enceintes définissant chacune une zone de coulée en communication de fluide avec la zone de fusion de ladite première enceinte,
- le dispositif comprend au moins un dispositif de tirage dudit matériau en fusion placé en aval d'au moins un port de sortie,
- ladite première enceinte présente une section transversale droite de forme circulaire, rectangulaire, carrée ou encore oblongue,
- ce dispositif comprend au moins un moyen d'injection d'un fluide de protection au niveau au moins de la partie d'au moins une torche à plasma, placée à l'intérieur de ladite première enceinte, ledit moyen d'injection étant configuré pour créer un écran gazeux entourant ladite partie afin de protéger celle-ci des conditions extrêmes régnant dans ladite première enceinte.

De préférence, ce gaz de protection est de l'air ou tout autre gaz tel qu'un gaz inerte. A titre d'exemple, dans ce dernier cas, il peut s'agir d'Azote (N₂).

### BREVE DESCRIPTION DES DESSINS

D'autres avantages, buts et caractéristiques particulières de la présente invention ressortiront de la description qui va suivre, faite, dans un but explicatif et nullement limitatif, en regard des dessins annexés, dans lesquels :
- la Figure 1 est une représentation schématique et en coupe d'un dispositif de vitrification selon un premier mode de réalisation particulier de la présente invention ;
- la Figure 2 est une vue partielle, de dessus et en coupe de la zone de débordement du dispositif de vitrification de la Fig. 1 ;
- la Figure 3 est une représentation schématique et en coupe d'un dispositif de vitrification selon un second mode de réalisation particulier de la présente invention.

### DESCRIPTION DETAILLEE DE MODE DE REALISATION DE L'INVENTION

Tout d'abord, on note que les figures ne sont pas à l'échelle.

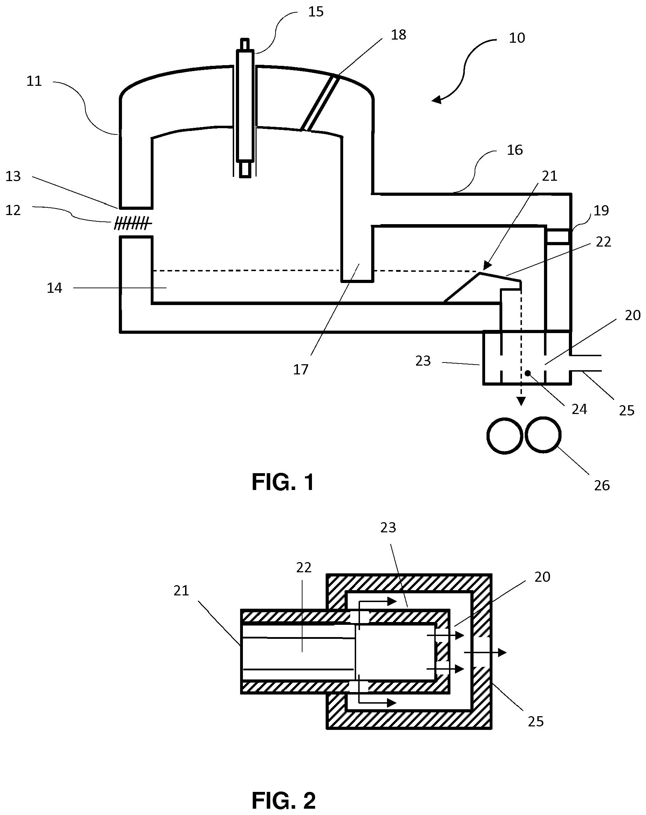

Les Figures 1 et 2 représentent schématiquement un dispositif 10 de vitrification d'un matériau pulvérulent selon un mode de réalisation particulier de la présente invention.

Ce dispositif 10 comporte une enceinte principale, ou four, de fusion 11 de forme cylindrique, laquelle est alimentée de manière continue en amont avec un flux de matériau pulvérulent au moyen d'un dispositif d'injection 12. Un port 13 d'introduction formé par une ouverture de section circulaire aménagée dans un ouvreau positionné dans la paroi latérale de l'enceinte de fusion 11 permet d'injecter la charge à traiter dans cette enceinte 11. Ce dispositif d'injection 12 est choisi pour son aptitude à délivrer un flux maîtrisé, à une pression et une température imposées par les conditions de pression et de température régnant dans l'enceinte de fusion 11. A titre d'exemple, il s'agit d'une vis refroidie. Il serait également possible de choisir des moyens d'injection par poussoir ou par transport pneumatique sous pression.

La charge de matériau pulvérulent à traiter est injectée dans l'enceinte de fusion 11 de manière à présenter une composante d'injection horizontale et une composante d'injection verticale dirigée vers le fond de l'enceinte de fusion 11. Cette charge tombe ainsi par gravité dans un bain 14 de fusion contenu dans un creuset.

La zone d'impact de cette charge à traiter avec le bain 14 de fusion constitue une zone de mélange. Cette dernière est donc une zone où se mélange la charge de matériau pulvérulent à traiter avec celle qui a déjà été portée à l'état liquide par fusion grâce à l'apport d'énergie provenant d'une torche 15 à plasma à arc non transféré, dans le bain 14 de fusion liquide.

La torche 15 à plasma à arc non transféré est montée dans une ouverture aménagée dans un ouvreau dans la voûte de l'enceinte de fusion 11. Elle est montée sur l'enceinte de fusion 11 de manière que le dard plasma qu'elle émet soit envoyé directement dans le bain 14 de fusion. De manière avantageuse, ce dard plasma pourrait être envoyé de manière inclinée vers le bain 14 de fusion et de biais pour brasser celui-ci.

La torche 15 à plasma à arc non transféré fonctionne de préférence avec de l'air pressurisé et traité comme gaz plasmagène, utilisant des moyens de compression et de traitement à partir de l'air atmosphérique. Il est également possible d'utiliser un autre gaz plasmagène, par exemple en modifiant les pourcentages d'oxygène et d'azote par rapport à ceux de l'air atmosphérique.

De manière avantageuse, l'extrémité de la torche 15 à plasma à arc non transféré placée à l'intérieur de l'enceinte 11 principale est entourée d'un film gazeux tel qu'un film d'air ou tout autre gaz, lequel forme un écran protégeant l'extrémité de la torche 15 à plasma de l'environnement agressif régnant dans l'enceinte 11 principale. Ce film gazeux est généré au moyen d'un dispositif d'introduction d'un gaz, par exemple à température ambiante, placé sur l'enceinte de fusion 11 (non représenté).

Des moyens de mesure et de contrôle (non représentés) permettent de capter la pression et la température dans l'enceinte de fusion 11 par des sondes de pression et de températures, la température du bain par pyromètre optique, le suivi de la fusion de la charge de matériau pulvérulent à traiter par un endoscope (non représentés). Ces mesures sont utilisées, par exemple, sous le contrôle d'une unité de traitement, par exemple un microprocesseur programmé à cet effet, pour déterminer la puissance électrique de la torche 15 à plasma et/ou le débit d'introduction dans le bain de fusion de la charge de matériau pulvérulent à traiter, dans le but de contrôler et d'optimiser le processus de fusion et, en particulier, la puissance électrique plasma nécessaire et suffisante à la fusion de cette charge à traiter.

La paroi latérale, le creuset et la voûte de l'enceinte de fusion 11 sont tous revêtus, côté interne, par des matériaux réfractaires à haute tenue en température, par exemple à base de chrome/corindon. Il en est de même pour les parois internes de la seconde enceinte 16.

Bien entendu, pour augmenter la capacité de traitement du dispositif 10 de vitrification, il serait possible de munir l'enceinte de fusion 11 d'au moins deux dispositifs d'injection 12 d'une charge de matériau pulvérulent et d'au moins deux torches à plasma 15 à arc non transféré pour chauffer le bain de fusion. Les dimensions du creuset seraient alors augmentées pour accueillir un bain 14 de fusion dont le volume serait plus important. A titre d'exemple, l'enceinte de fusion 11 pourrait également prendre une forme allongée ou elliptique. Afin d'assurer une évacuation satisfaisante du matériau en fusion formant le bain 14 de fusion, ce dispositif de vitrification pourra comporter au moins deux zones de coulée distinctes, chacune étant de préférence reliée à l'enceinte de fusion 11 à l'opposé d'un dispositif d'injection 12 correspondant.

Le dispositif comprend aussi une seconde enceinte 16 délimitant une zone de coulée du matériau en fusion. Cette zone de coulée est en communication de fluide avec la zone de fusion au travers d'une ouverture dont la portion supérieure est délimitée par l'extrémité d'une pierre de barrage 17 placée ici entre l'enceinte principale 11 et la seconde enceinte 16. Une partie du matériau en fusion provenant du bain 14 de fusion peut ainsi s'écouler au travers de cette ouverture vers la zone de coulée.

La pierre de barrage 17 est agencée de sorte que son extrémité libre qui participe avec les parois environnantes des enceintes à la délimitation de cette ouverture, est plongée dans le matériau en fusion. Cette pierre de barrage 17 en contact avec le bain 14 de fusion liquide permet ainsi de bloquer les gaz et fumées générés par la mise en fusion du matériau pulvérulent dans la zone de fusion.

Ces fumées et ces gaz restent ainsi confinés dans le volume intérieur de l'enceinte de fusion 11 et sont extraits au moyen d'un carneau d'évacuation 18 placé dans la voûte de l'enceinte de fusion 11, lequel est relié à un circuit d'extraction et de traitement des fumées. Ces fumées et ces gaz contiennent notamment la fraction vaporisée de la charge de matériau pulvérulent, qui résulte de réactions thermochimiques prenant place dans la zone de fusion à haute température, typiquement comprises entre 1300°C et 1600°C, de l'enceinte de fusion 11.

La seconde enceinte 16 comprend un brûleur 19 monté sur une paroi latérale de cette seconde enceinte, lequel permet de maintenir la température du matériau en fusion pour permettre son écoulement dans la zone de fusion vers le port de sortie. Bien entendu, il pourrait s'agir de manière plus générale de tout moyen de chauffage du matériau en fusion pour maintenir la température du matériau en fusion de ladite partie du bain de fusion s'écoulant dans ladite zone de fusion au-delà de son point de fusion, tel qu'une torche à arc non transféré.

La seconde enceinte 16 comporte également plusieurs orifices 20 d'extraction des gaz et fumées générés dans la zone de coulée, lesquels sont reliés à un circuit d'extraction des gaz et fumées.

Ces orifices d'extraction 20 sont placés au niveau d'une zone de débordement comprenant un port de sortie pour l'extraction du matériau en fusion, de manière à capter les gaz et fumées générés lors de l'étape d'extraction de ce matériau fondu. Cette zone de débordement est disposée à l'extrémité opposée de la zone de coulée à celle dans laquelle la pierre de barrage 17 est disposée.

La zone de débordement comporte un moyen de débordement comportant un bec de coulée 21 de préférence mobile pour ajuster sa position et dont la hauteur éventuellement réglable, permet de contrôler le niveau de débordement du matériau en fusion et ainsi le niveau du bain de fusion dans ladite zone de coulée. Ce bec de coulée 21 est prolongé par une rampe 22 inclinée, de préférence mobile avec ledit bec de coulée 21, amenant le matériau en fusion ayant débordé vers un port de sortie 23 du matériau fondu provenant du bain 14 de fusion.

Comme représenté sur la Figure 2, ce port de sortie 23 du matériau fondu comporte un conduit creux, extérieur au corps de la seconde enceinte 16, relié à cette seconde enceinte par un orifice de coulée et définissant un canal 24 intérieur d'extraction du matériau fondu, dans lequel ce dernier tombe par gravité au travers de l'orifice de coulée depuis la rampe 22 inclinée.

Les orifices d'extraction 20 sont ici distribués sur la paroi latérale du conduit creux du port de sortie 23 de sorte que de l'air extérieur est aspiré simultanément aux gaz et fumées.

On dilue ainsi mécaniquement ces gaz et fumées de sorte que leur dépôt et action corrosive sur les conduites du circuit 25 d'extraction des gaz et fumées sont significativement réduits. Ce circuit 25 d'extraction définit avantageusement une enveloppe entourant le port de sortie 23 pour capter l'ensemble des gaz et fumées générés.

Le matériau fondu ainsi extrait, se refroidit ultérieurement à l'atmosphère, se transformant en un matériau vitrifié atoxique. Notons que les orifices d'extraction 20 sont placés à l'extérieur et sous la seconde enceinte de manière à ne pas refroidir le matériau en fusion s'écoulant dans ladite zone de fusion.

Il peut être tiré lors de son extraction au moyen d'un laminoir 26 à rouleaux rotatifs refroidi. Ce laminoir 26 permet de tirer le matériau fondu débordant du moyen de débordement, à partir de la zone de coulée, à l'extérieur de la seconde enceinte 16. Le passage dans le laminoir 26 permet de garantir le caractère amorphe du vitrifiat solidifié.

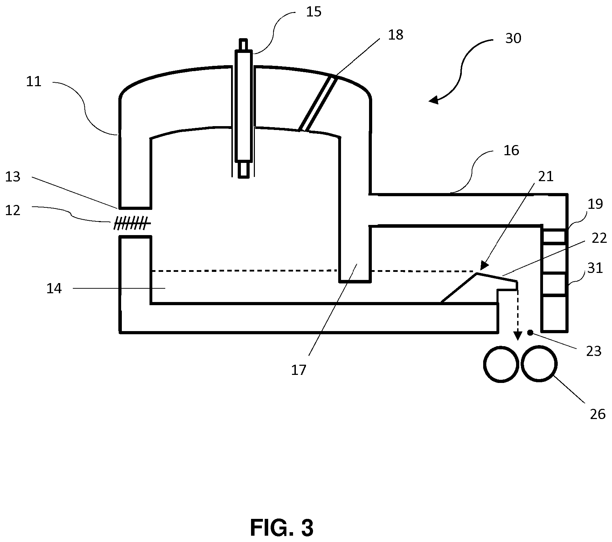

La Figure 3 est une représentation schématique et en coupe d'un dispositif de vitrification 30 selon un second mode de réalisation de la présente invention.

Les éléments de la Figure 3 portant les mêmes références que ceux des Figures 1 et 2 représentent les mêmes objets, lesquels ne seront pas décrits de nouveau ci-après.

Le dispositif de vitrification 30 représenté sur la Fig. 3 diffère de celui illustré aux Figures 1 et 2 en ce qu'il comporte au moins un orifice d'extraction 31, lequel n'est pas placé dans le port de sortie 23 mais sur la paroi latérale de la seconde enceinte délimitant la zone de coulée. Il est toutefois placé proche de ce port de sortie 23 pour assurer l'extraction des gaz et fumées générés lors de l'extraction du vitrifiat.

## Revendications

1. Procédé de vitrification d'un matériau pulvérulent, dans lequel ledit matériau pulvérulent est introduit dans une zone de fusion délimitée par une première enceinte (11), mis en fusion au moyen d'au moins une torche (15) à plasma dans un bain (14) de fusion pour alimenter ledit bain, ledit bain (14) de fusion étant placé dans ladite zone de fusion, une partie dudit bain (14) de fusion étant envoyée de ladite zone de fusion vers au moins une zone de coulée, chacune desdites zones de coulée étant délimitée par une seconde enceinte (16) correspondante en communication de fluide avec ladite première enceinte (11), et dans lequel on extrait ladite partie de bain en fusion dans une zone de débordement de chaque zone de coulée correspondante, dans lequel on réalise les étapes suivantes :
- extraire les gaz et les fumées générés par la mise en fusion du matériau pulvérulent dans ladite zone de fusion, lesdits gaz et fumées étant bloqués dans ladite première enceinte (11) par au moins une pierre de barrage (17), chaque pierre de barrage (17) étant placée entre ladite zone de fusion et une zone de coulée correspondante, chaque pierre de barrage (17) étant agencée de sorte que au moins son extrémité libre détermine également ladite partie du bain (14) de fusion s'écoulant de la zone de fusion vers ladite zone de coulée correspondante, **caractérisé en ce qu'**on réalise également les étapes suivantes :
- extraire dans chaque seconde enceinte (16), au moins les gaz et fumées générés lors de ladite étape d'extraction de ladite partie du bain en fusion (14), et
- chaque zone de débordement comportant un port de sortie par lequel passe ladite partie du bain de fusion (14) extraite, on capte une partie au moins desdits gaz et fumées générés lors de ladite étape d'extraction au travers d'un ou plusieurs orifices placés à proximité dudit port de sortie.

2. Procédé selon la revendication 1, **caractérisé en ce qu'**on régule le niveau du bain (14) de fusion, l'extraction des gaz et fumées générés par la mise en fusion du matériau pulvérulent dans ladite zone de fusion ainsi que l'extraction des gaz et fumées dans chaque seconde enceinte (16) de manière à favoriser l'écoulement du matériau en fusion du bain (14) de fusion vers chaque zone de coulée.

3. Procédé selon la revendication 1 ou 2, **caractérisé en ce que** chaque zone de débordement comportant un port de sortie présentant une paroi latérale délimitant un canal au travers duquel passe ladite partie du bain (14) de fusion extraite, une partie au moins de ladite paroi latérale s'étendant à l'extérieur de ladite seconde enceinte (16) correspondante comprenant au moins un orifice, on capte une partie au moins desdits gaz et fumées au travers dudit ou desdits orifices, de sorte à diluer lesdits gaz et fumées ainsi captés avec de l'air extérieur.

4. Procédé selon l'une quelconque des revendications 1 à 3, **caractérisé en ce que** pour au moins une torche (15) à plasma, on entoure au moins la partie de ladite torche (15) à plasma, placée à l'intérieur de ladite première enceinte (11), d'un écran gazeux de protection pour protéger au moins ladite partie, au moins un moyen d'introduction d'un fluide gazeux étant conformé pour l'introduction et la génération dudit écran gazeux autour de ladite au moins une partie.

5. Procédé selon l'une quelconque des revendications 1 à 4, **caractérisé en ce que** la zone de débordement de chaque zone de coulée comportant un bec de coulée délimitant le niveau du bain (14) de fusion; pour chaque zone de coulée, on ajuste la hauteur du bec de coulée correspondant pour régler le niveau du bain (14) de fusion de sorte qu'au moins l'extrémité libre de ladite pierre de barrage (17) correspondante est en permanence immergée en fonctionnement pour maintenir l'étanchéité entre les zones de fusion et de coulée correspondante pour les gaz et les fumées produites dans chacune de ces zones.

6. Dispositif de vitrification d'un matériau pulvérulent pour la mise en œuvre du procédé selon l'une quelconque des revendications 1 à 5, ledit dispositif comprenant une première enceinte (11) délimitant une zone de fusion dudit matériau pulvérulent, ladite première enceinte (11) comportant au moins une torche (15) à plasma pour générer un bain (14) de fusion à partir dudit matériau pulvérulent, au moins une seconde enceinte (16) délimitant une zone de coulée du matériau en fusion, lesdites première et seconde enceintes étant en communication de fluide pour l'écoulement d'une partie du bain (14) de fusion de ladite zone de fusion vers chaque zone de coulée correspondante, chaque zone de coulée comprenant une zone de débordement comportant un port de sortie pour l'extraction de ladite partie du bain (14) de fusion, ledit dispositif comprenant également une pierre de barrage (17) placée entre la zone de fusion et chaque zone de coulée en étant agencée de sorte qu'au moins son extrémité libre définit ladite partie du bain (14) de fusion s'écoulant de la zone de fusion vers ladite zone de coulée correspondante, ladite pierre de barrage (17) étant ainsi destinée à être en contact avec ledit bain (14) de fusion pour bloquer les gaz et fumées produits dans ladite zone de fusion ainsi que les infondus, ladite première enceinte (11) comprenant un moyen d'extraction des gaz et fumées présents dans ladite zone de fusion, **caractérisé en ce que** chaque seconde enceinte (16) est configurée pour capter les gaz et fumées produits au moins pendant l'extraction dudit matériau en fusion, chaque seconde enceinte comprenant un ou plusieurs orifices d'extraction desdits gaz et fumées reliés à un circuit d'extraction des gaz et fumées, lesdits orifices étant placés à proximité dudit port d'extraction ou dans le port d'extraction.

7. Dispositif selon la revendication 6, **caractérisé en ce que** le port de sortie de chaque seconde enceinte (16) comporte une paroi latérale définissant un canal d'extraction de ladite partie de bain en fusion, lequel s'étend à l'extérieur de ladite seconde enceinte (16) correspondante en comportant au moins un orifice d'extraction desdits gaz et fumées de sorte que lors de l'extraction de ladite partie, de l'air extérieur est mélangé auxdits gaz et fumées ainsi captés pour leur dilution.

8. Dispositif selon la revendication 6 ou 7, **caractérisé en ce qu'**il comporte au moins deux secondes enceintes définissant chacune une zone de coulée en communication de fluide avec la zone de fusion de ladite première enceinte (11).

9. Dispositif selon l'une quelconque des revendications 6 à 8, **caractérisé en ce que** ladite première enceinte (11) présente une section transversale droite de forme circulaire, rectangulaire, carrée ou encore oblongue.

10. Dispositif selon l'une quelconque des revendications 6 à 9, **caractérisé en ce qu'**il comprend au moins un moyen d'injection d'un fluide de protection au niveau au moins de la partie d'au moins une torche (15) à plasma, placée à l'intérieur de ladite première enceinte (11), ledit moyen d'injection étant configuré pour créer un écran gazeux entourant ladite partie afin de protéger celle-ci des conditions extrêmes régnant dans ladite première enceinte (11).

11. Dispositif selon la revendication 10, **caractérisé en ce que** ledit gaz de protection est de l'air ou un gaz inerte.

## Patentansprüche

1. Verfahren zum Verglasen eines pulverförmigen Materials, wobei das pulverförmige Material in einen durch eine erste Kammer (11) begrenzten Schmelzbereich eingebracht und mittels wenigstens eines Plasmabrenners (15) in einem Schmelzbad (14) geschmolzen wird, um das Bad zu versorgen, wobei das Schmelzbad (14) in dem Schmelzbereich angeordnet wird, wobei ein Teil des Schmelzbads (14) aus dem Schmelzbereich in wenigstens einen Gießbereich mündet, wobei jeder der Gießbereiche durch eine entsprechende zweite Kammer (16) begrenzt wird, die in Fluidverbindung mit der ersten Kammer (11) steht, und wobei der Teil des Schmelzbades in einem Überlaufbereich jedes entsprechenden Gießbereichs extrahiert wird, wobei die folgenden Schritte durchgeführt werden:
- Extrahieren der Gase und Dämpfe, die beim Schmelzen des pulverförmigen Materials in dem Schmelzbereich entstehen, wobei die Gase und Dämpfe in der ersten Kammer (11) durch wenigstens einen Dammstein (17) zurückgehalten werden, wobei jeder Dammstein (17) zwischen dem Schmelzbereich und einem entsprechenden Gießbereich angeordnet wird, wobei jeder Sperrstein (17) so angeordnet wird, dass wenigstens sein freies Ende auch den Teil des Schmelzbades (14) bestimmt, der von dem Schmelzbereich in den entsprechenden Gießbereich mündet,
**dadurch gekennzeichnet, dass** auch die folgenden Schritte durchgeführt werden:
- in jeder zweiten Kammer (16) werden wenigstens die Gase und Dämpfe extrahiert, die bei dem Schritt des Extrahieren des Teils des Schmelzbades (14) entstehen, und
- wobei jeder Überlaufbereich eine Auslassöffnung aufweist, durch den der extrahierte Teil des Schmelzbades (14) strömt, und wenigstens ein Teil der bei dem genannten Extraktionsschritt erzeugten Gase und Dämpfe durch eine oder mehrere Öffnungen in der Nähe der genannten Auslassöffnung aufgefangen wird.

2. Verfahren nach Anspruch 1, **dadurch gekennzeichnet, dass** der Füllstand des Schmelzbades (14), die Extraktion der durch das Schmelzen des pulverförmigen Materials in dem Schmelzbereich erzeugten Gase und Dämpfe sowie die Extraktion der Gase und Dämpfe in jeder zweiten Kammer (16) so reguliert wird, dass das Fließen des geschmolzenen Materials aus dem Schmelzbad (14) zu jedem Gießbereich begünstigt wird.

3. Verfahren nach Anspruch 1 oder 2, **dadurch gekennzeichnet, dass** jeder Überlaufbereich eine Auslassöffnung mit einer Seitenwand aufweist, die einen Kanal begrenzt, durch den der extrahierte Teil des Schmelzbades (14) fließt, wobei sich wenigstens ein Teil dieser Seitenwand außerhalb der entsprechenden zweiten Kammer (16) erstreckt und wenigstens eine Öffnung aufweist, und wenigstens ein Teil der Gase und Dämpfe durch diese Öffnung(en) aufgefangen wird, um die aufgefangen Gase und Dämpfe mit Außenluft zu verdünnen.

4. Verfahren nach einem der Ansprüche 1 bis 3, **dadurch gekennzeichnet, dass** für wenigstens einen Plasmabrenner (15) wenigstens der Teil des Plasmabrenners (15), der innerhalb der ersten Kammers (11) platziert ist, von einem gasförmigen Schutzschild umgeben wird, um wenigstens diesen Teil zu schützen, wobei wenigstens eine Vorrichtung zum Einleiten eines gasförmigen Fluids zum Einleiten und Erzeugen des gasförmigen Schutzschilds um wenigstens diesen Teil herum ausgebildet wird.

5. Verfahren nach einem der Ansprüche 1 bis 4, **dadurch gekennzeichnet, dass** der Überlaufbereich jedes Gießbereichs eine Gießdüse aufweist, die den Pegel des Schmelzbades (14) begrenzt, wobei für jeden Gießbereich die Höhe der entsprechenden Gießdüse eingestellt wird, um den Pegel des Schmelzbades (14) so zu regulieren, dass wenigstens das freie Ende des entsprechenden Dammsteins (17) während des Betriebs ständig eingetaucht ist, um die Dichtigkeit zwischen den entsprechenden Schmelz- und Gießbereichen für die in jedem dieser Bereiche entstehenden Gase und Dämpfe aufrechtzuerhalten.

6. Vorrichtung zum Verglasen eines pulverförmigen Materials zur Durchführung des Verfahrens nach einem der Ansprüche 1 bis 5, wobei die Vorrichtung eine erste Kammer (11) umfasst, die einen Schmelzbereich des pulverförmigen Materials begrenzt, wobei die erste Kammer (11) wenigstens einen Plasmabrenner (15) zur Erzeugung eines Schmelzbades (14) aus dem pulverförmigen Material umfasst und wenigstens eine zweite Kammer (16), die einen Gießbereich für das geschmolzene Material begrenzt,
wobei die erste und die zweite Kammer in Fluidverbindung stehen, damit ein Teil des Schmelzbades (14) aus dem Schmelzbereich in jeden entsprechenden Gießbereich fließen kann, wobei jeder Gießbereich einen Überlaufbereich umfasst, der eine Auslassöffnung zum Extrahieren des Teils des Schmelzbades (14) bildet, wobei die Vorrichtung ferner einen Dammstein (17) umfasst, der zwischen dem Schmelzbereich und jedem Gießbereich angeordnet ist und so angeordnet ist, dass wenigstens sein freies Ende den Teil des Schmelzbades (14) begrenzt, der aus dem Schmelzbereich in den entsprechenden Gießbereich mündet, wobei der Dammstein (17) dazu bestimmt ist, mit dem Schmelzbad (14) in Kontakt zu stehen, um die in dem Schmelzbereich erzeugten Gase und Dämpfe sowie die Schlacke zurückzuhalten, wobei die erste Kammer (11) eine Vorrichtung zum Extrahieren der in dem Schmelzbereich vorhandenen Gase und Dämpfe umfasst, **dadurch gekennzeichnet, dass** jede zweite Kammer (16) dazu ausgebildet ist, die wenigstens während der Extraktion des geschmolzenen Materials entstehenden Gase und Dämpfe aufzufangen, wobei jede zweite Kammer eine oder mehrere Öffnungen zum Extrahierenn der Gase und Dämpfe umfasst, die mit einem Extraktionskreislauf für die Gase und Dämpfe verbunden sind, wobei die Öffnungen in der Nähe der Extraktionsöffnung oder in der Extraktionsöffnung angeordnet sind.

7. Vorrichtung nach Anspruch 6, **dadurch gekennzeichnet, dass** die Auslassöffnung jeder zweiten Kammer (16) eine Seitenwand aufweist, die einen Extraktionskanal für den Teil des Schmelzbades bildet, der sich außerhalb des zweiten Kammers (16) hinaus erstreckt und wenigstens eine Öffnung zum Extrahieren der Gase und Dämpfe aufweist, so dass beim Extrahieren dieses Teils, Außenluft mit den so aufgefangenen Gasen und Dämpfen gemischt wird, um diese zu verdünnen.

8. Vorrichtung nach Anspruch 6 oder 7, **dadurch gekennzeichnet, dass** sie wenigstens zwei zweite Kammern umfasst, die jeweils einen Gießbereich definieren, der in Fluidverbindung mit dem Schmelzbereich der ersten Kammer (11) steht.

9. Vorrichtung nach einem der Ansprüche 6 bis 8, **dadurch gekennzeichnet, dass** die erste Kammer (11) einen geraden Querschnitt in Form eines Dreiecks, eines Rechtecks, eines Quadrats oder eines länglichen Rechtecks aufweist.

10. Vorrichtung nach einem der Ansprüche 6 bis 9, **dadurch gekennzeichnet, dass** sie wenigstens ein Mittel zum Einspritzen eines Schutzfluids wenigstens im Bereich des Teils wenigstens eines Plasmabrenners (15) umfasst, der innerhalb der ersten Kammer (11) angeordnet ist, wobei das Einspritzmittel dazu ausgebildet ist, einen Gasschirm um den genannten Teil herum zu erzeugen, um diesen vor den extremen Bedingungen in der genannten ersten Kammer (11) zu schützen.

11. Vorrichtung nach Anspruch 10, **dadurch gekennzeichnet, dass** das Schutzgas Luft oder ein Inertgas ist.

## Claims

1. Method for vitrifying a pulverulent material, wherein said pulverulent material is introduced into a melting zone delimited by a first chamber (11), melted by means of at least one plasma torch (15) in a melting bath (14) for supplying said bath, said melting bath (14) being placed in said melting zone, a part of said melting bath (14) being sent from said melting zone to at least one casting zone, each of said casting zones being delimited by a corresponding second chamber (16) in fluid communication with said first chamber (11), and wherein said melting bath part is extracted in an overflow zone of each corresponding casting zone, wherein the following steps are carried out:
- extracting gases and fumes generated by melting the pulverulent material in said melting zone, said gases and fumes being blocked in said first enclosure (11) by at least one dam stone (17), each dam stone (17) being placed between said melting zone and a corresponding casting zone, each dam stone (17) being arranged such that at least its free end also determines said part of the melting bath (14) flowing from the melting zone to said corresponding casting zone, **characterized in that** the following steps are also carried out:
- extracting in each second enclosure (16) at least the gases and fumes generated during said extraction step of said part of said melting bath (14), and
- each overflow zone having an outlet port through which said portion of the extracted melting bath (14) passes, at least a portion of said gases and fumes generated in said extraction step are collected through one or more orifices placed in the vicinity of said outlet port.

2. Method according to claim 1, **characterized in that** the level of the melting bath (14) is regulated, the extraction of the gases and fumes generated by the melting of the pulverulent material in said melting zone as well as the extraction of the gases and fumes in each second chamber (16) so as to promote the flow of the molten material from the melting bath (14) to each casting zone.

3. Method according to claim 1 or 2, **characterized in that** each overflow zone comprising an outlet port having a side wall delimiting a channel through which said part of the extracted melting bath (14) passes, at least part of said side wall extending outside said corresponding second chamber (16) comprising at least one orifice, at least part of said gases and fumes are collected through said orifice or said orifices, so as to dilute said gases and fumes thus collected with external air.

4. The method according to any one of claims 1 to 3, **characterized in that** for at least one plasma torch (15), at least the part of said plasma torch (15), placed inside said first enclosure (11), is surrounded by a protective gas shield to protect at least said part, at least one means for introducing a gaseous fluid being shaped for the introduction and generation of said gaseous shield around said at least one part.

5. The method according to any one of claims 1 to 4, **characterized in that** the overflow zone of each casting zone comprises a pouring spout delimiting the level of the melting bath (14); for each casting zone, the height of the corresponding pouring spout is adjusted to adjust the level of the melting bath (14) such that at least the free end of said corresponding dam stone (17) is permanently immersed in operation to maintain the seal between the corresponding melting and casting zones for the gases and fumes produced in each of these zones.

6. A device for vitrifying a pulverulent material for carrying out the method according to any one of claims 1 to 5, said device comprising a first enclosure (11) delimiting a melting zone of said pulverulent material, said first enclosure (11) comprising at least one plasma torch (15) for generating a melting bath (14) from said pulverulent material, at least one second enclosure (16) delimiting a zone for casting the molten material, said first and second enclosures being in fluid communication for the flow of a part of the melting bath (14) to each corresponding casting zone, each casting zone comprising an overflow zone comprising an outlet port for extracting said part from the melting bath (14), said device also comprising a dam stone (17) placed between the melting zone and each casting zone by being arranged such that at least its free end defines said portion of the melting bath (14) flowing from the melting zone to said corresponding casting zone, whereby said dam stone (17) is intended to be in contact with said melting bath (14) to block gases and fumes produced in said melting zone as well as the unmelted material, said first enclosure (11) comprising means for extracting gases and fumes present in said melting zone, **characterized in that**
- each second enclosure (16) is configured to collect the gases and fumes produced at least during the extraction of said molten material,
- each second enclosure (16) comprising one or more orifices for extracting said gases and fumes, connected to a circuit for extracting gases and fumes, said orifices being placed in the vicinity of said extraction port or in the extraction port.

7. Device according to claim 6, **characterized in that** the outlet port of each second enclosure (16) has a wall side defining an extraction channel of said part of said melting bath, which extends outside said corresponding second enclosure (16) by including at least one extraction port of said gases and fumes so that upon extraction of said portion, external air is mixed with said gases and fumes thus captured for dilution thereof.

8. Device according to any one of claims 6 or 7, **characterized in that** it comprises at least two second enclosures each defining a casting zone in fluid communication with the melting zone of said first enclosure (11).

9. Device according to any one of claims 6 to 8, **characterized in that** said first enclosure (11) has a straight cross section of circular, rectangular, square or even oblong shape.

10. Device according to any one of claims 6 to 9, **characterized in that** it comprises at least one means for injecting a protective fluid at the level of at least the part of at least one plasma torch (15), placed inside said first enclosure (11), said injection means being configured to create a gaseous screen surrounding said part in order to protect the latter from extreme conditions prevailing in said first enclosure (11).

11. Device according to claim 10, **characterized in that** said protective gas is air or an inert gas.
